# EUROPÄISCHE PATENTSCHRIFT

(11) **EP 2 530 540 B1**
(45) Veröffentlichungstag und Bekanntmachung des Hinweises auf die Patenterteilung: **18.05.2016**
(21) Anmeldenummer: 11168181.3
(22) Anmeldetag: 31.05.2011
(51) Int. Cl.: G05B 19/416, B23Q 15/22

(54) **Verfahren zur Steuerung einer Rotationsbewegung eines Werkzeugs und Steuereinrichtung**
Method for controlling a rotation of a tool and control device
Procédé de commande d'un mouvement de rotation d'un outil et dispositif de commande

(43) Veröffentlichungstag der Anmeldung: 05.12.2012
(73) Patentinhaber: Siemens Aktiengesellschaft, 80333 München (DE)
(72) Erfinder: Spielmann, Ralf, 70569 Stuttgart (DE)

(56) Entgegenhaltungen:
- EP-A2- 1 760 562
- GB-A- 2 062 898
- US-A- 5 827 020
- US-A- 5 858 142
- US-A1- 2003 170 085

## Beschreibung

Die Erfindung betrifft ein Verfahren zur Steuerung einer Rotationsbewegung eines Werkzeugs anhand eines Teileprogramms bei einer Werkzeugmaschine. Weiterhin betrifft die Erfindung eine Steuereinrichtung zur Steuerung einer Werkzeugmaschine.

Bei Werkzeugmaschinen wird die Bearbeitung eines Werkstücks in der Regel mit einem vorzugsweise schnell rotierenden Werkzeug, wie z.B. einem Fräser, durchgeführt. Das Werkzeug wird dabei von einem Motor rotierend angetrieben. Der Motor, der das Werkzeug rotierend antreibt, wird fachspezifisch auch als sogenannter Spindelmotor bezeichnet. Handelsüblich wird, wenn das Werkzeug, z.B. unmittelbar nach einem Werkzeugwechsel Still steht, zunächst das Werkzeug auf eine in einem Teileprogramm vorgegebene Solldrehzahl rotatorisch schnell beschleunigt und in Richtung des Werkstücks im Raum verfahren. Die Rotationsbeschleunigung des Werkzeugs ist dabei im allgemeinen sehr hoch und fest durch einen in der Steuereinrichtung der Werkzeugmaschine hinterlegten Maschinenparameter vorgegeben, so dass in der Regel schon lange bevor das Werkzeug zur Bearbeitung des Werkstücks mit dem Werkstück in Kontakt tritt, das Werkzeug sich mit der Solldrehzahl dreht.

Durch dieses Vorgehen wird unnötig viel Energie verbraucht, da das Werkzeug in der Regel schon lange bevor es das Werkstück erreicht, auf Solldrehzahl beschleunigt worden ist und somit fast während der gesamten Verfahrzeit, die benötigt wird, um das Werkzeug aus seiner aktuellen Position zum Werkstück zu verfahren, die Solldrehzahl vom Spindelmotor aufrechterhalten werden muss, obwohl noch gar keine Bearbeitung des Werkstücks stattfindet. Weiterhin wird infolge des notwendigen hohen Drehmoments, welches der Spindelmotor zur Realisierung der hohen Rotationsbeschleunigung benötigt, unnötig viel Energie verbraucht, da z.B. durch die dabei auftretenden hohen Ströme im Spindelmotor entsprechend hohe thermische Verluste entstehen und der Motor nicht mit optimalem Wirkungsgrad arbeitet.

Aus der US 5,827,020 A, der US 7,346,423 B2 und der US 4,408,280 A sind Steuereinrichtungen zur Steuerung der Bearbeitung eines Werkstücks bekannt.

Aus der US 5,858,142 ist eine Reibschweißvorrichtung bekannt, bei der zwei miteinander zu verschweißende Teile relativ zueinander in Rotation versetzt und unter Ausübung einer bestimmten Kraft aneinander gepresst werden. Die Rotationsgeschwindigkeit und die ausgeübte Kraft werden während des Schweißvorganges mittels einer Steuereinrichtung überwacht.

Es ist Aufgabe der Erfindung den Energieverbrauch bei einer Werkzeugmaschine zu reduzieren.

Diese Aufgabe wird gelöst durch ein Verfahren zur Steuerung einer Rotationsbewegung eines Werkzeugs anhand eines Teileprogramms bei einer Werkzeugmaschine, wobei in dem Teileprogramm eine vom Werkzeug durchzuführende Verfahrbewegung und eine Solldrehzahl des Werkzeugs vorgegeben sind, wobei das Werkzeug bei der Durchführung der vorgegebenen Verfahrbewegung vom Beginn der vorgegeben Verfahrbewegung bis zum Ende der vorgegebenen Verfahrbewegung mit einer derartigen Rotationsbeschleunigung beschleunigt wird, dass am Ende der vorgegebenen Verfahrbewegung des Werkzeugs die Drehzahl des Werkzeugs der Solldrehzahl entspricht, wobei anhand der im Teileprogramm (2) vorgegebenen Verfahrbewegung des Werkzeugs (10) die benötigte Zeitdauer (T) zur Durchführung der vorgegebenen Verfahrbewegung (12) ermittelt wird, wobei anhand der Zeitdauer (T) die Rotationsbeschleunigung ermittelt wird.

Weiterhin wird diese Aufgabe gelöst durch eine Steuereinrichtung zur Steuerung einer Werkzeugmaschine, wobei die Steuereinrichtung zur Steuerung einer in einem Teileprogramm vorgegebenen Verfahrbewegung eines Werkzeugs und zur Ermittlung einer Rotationsbeschleunigung, mit der das Werkzeug bei der Durchführung der vorgegebenen Verfahrbewegung vom Beginn der vorgegeben Verfahrbewegung bis zum Ende der vorgegebenen Verfahrbewegung beschleunigt wird, ausgebildet ist, wobei in dem Teileprogramm eine Solldrehzahl des Werkzeugs vorgegeben ist, wobei die Steuereinheit ausgebildet ist, die Rotationsbeschleunigung derart zu ermitteln, dass am Ende der vorgegebenen Verfahrbewegung des Werkzeugs, die Drehzahl des Werkzeugs der Solldrehzahl entspricht, wobei von der Steuereinrichtung (1) anhand der im Teileprogramm (2) vorgegebenen Verfahrbewegung des Werkzeugs (10) die benötigte Zeitdauer (T) zur Durchführung der vorgegebenen Verfahrbewegung (12) und anhand der Zeitdauer (T) die Rotationsbeschleunigung ermittelbar sind.

Vorteilhafte Ausbildungen des Verfahrens ergeben sich analog zu vorteilhaften Ausbildungen der Steuereinrichtung und umgekehrt. Vorteilhafte Ausbildungen der Erfindung ergeben sich aus den unabhängigen Ansprüchen.

Es erweist sich als vorteilhaft, wenn anhand der im Teileprogramm vorgegebenen Verfahrbewegung des Werkzeugs die benötigte Zeitdauer zur Durchführung der vorgegebenen Verfahrbewegung ermittelt wird, wobei anhand der Zeitdauer die Rotationsbeschleunigung ermittelt wird. Hierdurch wird eine besonders einfache Ermittlung der Rotationsbeschleunigung ermöglicht.

Weiterhin erweist es sich als vorteilhaft, wenn vom Beginn der vorgegeben Verfahrbewegung bis zum Ende der vorgegebenen Verfahrbewegung die Rotationsbeschleunigung konstant ist, da dann der Energieverbrauch der Werkzeugmaschine besonders gering ist.

Die Steuereinrichtung zur Steuerung einer Werkzeugmaschine kann z.B. in Form einer CNC-Steuerung (Computer Numerical Control) vorliegen, wobei die CNC-Steuerung z.B. in Form einer Recheneinheit vorliegen kann, auf der ein Computerprogramm mit Programmcode zur Durchführung des erfindungsgemäßen Verfahrens ausgeführt wird. Die Recheneinheit kann dabei eine oder mehrere Prozessoren aufweisen, auf denen das Computerprogramm abläuft.

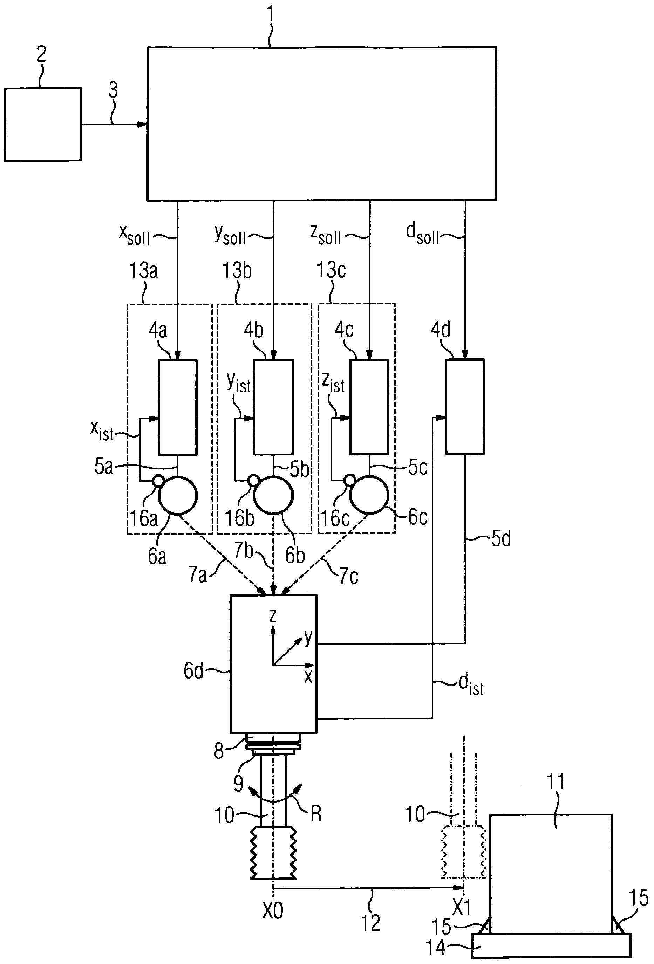

Ein Ausführungsbeispiel der Erfindung ist in der Zeichnung dargestellt und wird im Folgenden näher erläutert.

In der Figur ist schematisiert eine Werkzeugmaschine dargestellt. Die Werkzeugmaschine verfügt im Rahmen des Ausführungsbeispiels über drei Maschinenachsen, durch die eine Relativbewegung im Raum zwischen einem Werkzeug 10, das im Rahmen des Ausführungsbeispiels in Form eines Fräsers vorliegt, und einem Werkstück 11 durchgeführt werden kann. Das Werkzeug 10 ist dabei in eine Werkzeugaufnahme 9, die in eine Spindel 8 integriert ist, eingespannt. Der Motor 6b treibt rotatorisch die Spindel 8 und damit das Werkzeug 10 an. Der Motor 6b wird fachspezifisch auch als sogenannter Spindelmotor bezeichnet. Der Motor 6b und damit das Werkzeug 10 lassen sich mit den Antrieben 13a, 13b und 13c in X-, Y- und Z-Richtung translatorisch im Raum bewegen, d.h. translatorisch verfahren, was in der Figur durch gestrichelte Pfeile 7a, 7b und 7c dargestellt ist. Ein zu bearbeitendes Werkstück 11 ist mittels einer Einspannvorrichtung 15 an einem Maschinentisch 14 der Werkzeugmaschine befestigt. Es sei hier angemerkt, dass die Werkzeugmaschine selbstverständlich auch mehr oder weniger als drei Maschinenachsen aufweisen kann.

Die Werkzeugmaschine weist eine Steuereinrichtung 1 zur Steuerung der Werkzeugmaschine auf. Die Steuereinrichtung 1 ermittelt anhand eines Teileprogramms 2, das von der Steuereinrichtung 1 eingelesen wird, was in der Figur durch den Pfeil 3 dargestellt ist, Bewegungssollwerte xₛₒₗₗ, yₛₒₗₗ und Zₛₒₗₗ zur Steuerung der Bewegungen des Werkzeugs 10. Die Steuereinheit 1 ermittelt die Bewegungssollwerte anhand des Teileprogramms 2, in dem die von Werkzeug 10 in Bezug zum Werkstück 11 durchzuführende Bewegungen und eine Solldrehzahl, mit der sich das Werkzeug 10 drehen soll, in Form von Befehlen definiert ist.

Bei der im Rahmen des Ausführungsbeispiels dargestellten Maschine, zur Realisierung der Relativbewegung zwischen Werkzeug und dem Werkstück 11, wird das Werkzeug 10 mit Hilfe der Antriebe 13a, 13b und 13c im Raum verfahren, während das Werkstück 11 ortsfest auf dem gegenüber seiner Umgebung ruhend angeordneten Maschinentisch 14 angeordnet ist. Die Werkzeugmaschine kann aber auch z.B. eine derartige Kinematik verfügen, dass zur Realisierung der Verfahrbewegung des Werkzeugs nicht das Werkzeug selbst bewegt wird, sondern der Maschinentisch und somit das Werkstück sich mit Hilfe von Antrieben im Raum bewegt und somit verfahren wird. Es sind aber auch Mischformen möglich, bei denen sich zur Realisierung der Verfahrbewegung des Werkzeugs gegenüber dem Werkstück sowohl das Werkzeug 10 als auch das Werkstück 11 im Raum bewegen. Wenn im Rahmen der vorliegenden Erfindung von einer vom Werkzeug durchzuführende Verfahrbewegung oder einem Verfahren des Werkzeugs gesprochen wird, so ist damit eine Relativbewegung zwischen Werkzeug und Werkstück gemeint, die durch Bewegen des Werkzeugs und/oder durch Bewegen des Werkstücks im Raum gegenüber einer ruhenden Umgebung der Werkzeugmaschine realisiert werden kann.

Die Steuereinrichtung 1 erzeugt anhand des Teileprogramms 2 die Bewegungssollwerte xₛₒₗₗ, yₛₒₗₗ und zₛₒₗₗ, die im Rahmen des Ausführungsbeispiels in Form von Lagesollwerten vorliegen, zur Steuerung der translatorischen Bewegung des Motors 6b und damit des Werkzeugs 10, was in der Figur durch gestrichelte Pfeile 7a, 7b und 7c dargestellt ist. Weiterhin werden von der Steuereinrichtung 1 anhand des Teileprogramms 2 Drehzahlsollwerte dₛₒₗₗ ermittelt. Die Bewegungssollwerte und die Drehzahlsollwerte werden als Regelsollgrößen an die jeweilig zugeordnete Antriebseinheit 4a, 4b, 4c und 4d übermittelt. Die Bewegungssollwerte xₛₒₗₗ, yₛₒₗₗ und zₛₒₗₗ und die Drehzahlsollwerte dₛₒₗₗ werden dabei in der Regel in einem festen Zeittakt, z.B. alle 5 ms, von der Steuereinrichtung erzeugt und ausgegeben. Die Antriebseinheiten 4a, 4b und 4c umfassen dabei jeweils eine Regelung und einen Umrichter zur Ansteuerung von jeweils zugeordneten Motoren 6a, 6b und 6c, welche den Motor 6d und damit das Werkzeug 10 translatorisch in X-, Y- und Z-Richtung bewegen. Die Antriebseinheit 4d umfasst ebenfalls eine Regelung und einen Umrichter zur Ansteuerung des Motors 6d.

Die Antriebseinheiten 4a, 4b, 4c und 4d sind dabei über elektrische Leitungen 5a, 5b, 5c und 5d mit den jeweils zugeordneten Motoren 6a, 6b, 6c und 6d verbunden. Den Motoren sind Lagegeber 5a, 5b und 5c zugeordnet, die die Istlagen der Motorwellen ermitteln und in Form von Lageistwerten xᵢₛₜ, yᵢₛₜ und zᵢₛₜ als Regelistgrößen an die jeweilig zugeordnete Antriebseinheit 4a, 4b und 4c übermitteln. Weiterhin wird von einen in den Motor 6b integrierten Geber die Drehzahlistwerte dᵢₛₜ der Spindel 8 und damit des Werkzeugs 10 an die Antriebseinheit 4d als Regelistgröße übermittelt. Die jeweilige Regelung der Antriebseinheiten regelt die jeweilige Regelistgröße derart, dass dieser der jeweiligen Regelsollgröße entspricht.

Im Rahmen des Ausführungsbeispiels befindet sich das Werkzeug 10 gerade nach einem Werkzeugwechsel an der Position X0 und bewegt sich weder im Raum noch rotatorisch. Wie bereits erwähnt, sind im Teileprogramm 2 die vom Werkzeug 10 in Bezug auf das Werkstück 11 durchzuführenden Verfahrbewegungen in Form von hintereinander angeordneten Befehlen vorgegeben. Im Rahmen des Ausführungsbeispiels weist das Teileprogramm unter anderem die Befehle
S1000 M3
G0 X200 Y0 Z0
auf.

Mit dem Befehl S1000 wird festgelegt, dass das Werkzeug 10 auf die Solldrehzahl von 1000 Umdrehungen pro Minute rotatorisch beschleunigt werden soll. Mit dem Befehl M3 wird definiert, dass sich die Spindel 8 und damit das Werkzeug 10 rechts herum drehen sollen. Mit den Befehlen X200, Y0 und Z0 wird vorgegeben, dass das Werkzeug 10 von der Position X0 (X=0, Y=0, Z=0) auf die Position X1 (X=200, Y=0, Z=0), d.h. um 200 mm in positive X-Richtung, verfahren werden soll (siehe Pfeil 12 in der Figur). Durch die Angabe G0 wird festgelegt, dass die Bewegung in X-Richtung im Eilgang erfolgen soll, d.h. mit einer bestimmten vorgegebenen relativ schnellen Geschwindigkeit, die im Rahmen von allgemeinen Maschinenparametern festgelegt ist, welche in der Steuereinrichtung hinterlegt sind.

Beim Stand der Technik würde nun das Werkzeug innerhalb von z.B. 0,2 s auf 1000 U/min. rotatorisch beschleunigen, wobei die Zeitdauer für den Verfahrweg von 200 mm von der Position X0 auf die Position X1 im Rahmen des Ausführungsbeispiels 2 s dauert.

Bei der vorliegenden Erfindung wird das Werkzeug 10 bei der Durchführung der vorgegebenen Verfahrbewegung (G0 X200 Y0 Z0) vom Beginn der vorgegeben Verfahrbewegung (Position XO) bis zum Ende der vorgegebenen Verfahrbewegung (Position X1), mit einer derartigen Rotationsbeschleunigung beschleunigt, dass am Ende der vorgegebenen Verfahrbewegung des Werkzeugs 10, die Drehzahl des Werkzeugs 10 der Solldrehzahl entspricht. Vorzugsweise ist vom Beginn (Position X0) der vorgegeben Verfahrbewegung bis zum Ende (Position X1) der vorgegebenen Verfahrbewegung die Rotationsbeschleunigung dabei konstant. Es sei angemerkt, dass die Rotationsbeschleunigung die Beschleunigung in Rotationsrichtung R des Werkstücks 10 ist und auch einen negativen Wert (Abbremsen der Rotationsbewegung des Werkzeugs) annehmen kann.

Das Werkzeug 10 wird somit im Ausführungsbeispiel während der Durchführung der vorgegebenen Verfahrbewegung von 0 U/min auf 1000 U/min. rotatorisch beschleunigt. Durch das so realisierte sanfte Beschleunigen über die im Rahmen des Ausführungsbeispiels für die Verfahrbewegung benötigte Zeit von 2 s wird gegenüber dem aus dem Stand der Technik bekannten schnellen Beschleunigen des Werkzeugs Energie eingespart, da zum einen erst unmittelbar vor der tatsächlichen Bearbeitung des Werkstücks das Werkzeug auf Solldrehzahl beschleunigt ist und zum anderen hohe Motorströme, bei denen der das Werkzeug 10 rotatorisch antreibende Motor 6d nicht mehr in einem energieeffizienten Arbeitsbereich arbeitet, vermieden werden.

In einer nachfolgenden im Teileprogramm 2 weiteren vorgegebenen Verfahrbewegung kann dann das Werkzeug 10 z.B. weiter in X-Richtung langsam verfahren werden und die eigentliche Fräsbearbeitung des Werkstücks 11 beginnen.

Die Steuereinrichtung ermittelt anhand der im Teileprogramm vorgegebenen Verfahrbewegung des Werkzeugs die benötigte Zeitdauer T zur Durchführung der vorgegebenen Verfahrbewegung und ermittelt anschließend anhand der Zeitdauer T die Rotationsbeschleunigung des Werkzeugs. Entsprechend der ermittelten Rotationsbeschleunigung werden von der Steuereinrichtung 1 die Drehzahlsollwerte dₛₒₗₗ ermittelt.

## Patentansprüche

1. Verfahren zur Steuerung einer Rotationsbewegung eines Werkzeugs (10) anhand eines Teileprogramms (2) bei einer Werkzeugmaschine, wobei in dem Teileprogramm (2) eine vom Werkzeug (10) durchzuführende Verfahrbewegung (12) und eine Solldrehzahl des Werkzeugs (10) vorgegeben sind, **dadurch gekennezeichnet,** dass das Werkzeug (10) bei der Durchführung der vorgegebenen Verfahrbewegung (12) vom Beginn (X0) der vorgegeben Verfahrbewegung bis zum Ende (X1) der vorgegebenen Verfahrbewegung (12) mit einer derartigen Rotationsbeschleunigung beschleunigt wird, dass am Ende (X1) der vorgegebenen Verfahrbewegung (12) des Werkzeugs (10) die Drehzahl des Werkzeugs (10) der Solldrehzahl entspricht, wobei anhand der im Teileprogramm (2) vorgegebenen Verfahrbewegung des Werkzeugs (10) die benötigte Zeitdauer (T) zur Durchführung der vorgegebenen Verfahrbewegung (12) ermittelt wird, und wobei anhand der Zeitdauer (T) die Rotationsbeschleunigung ermittelt wird.

2. Verfahren nach Anspruch 1,
**dadurch gekennzeichnet, dass** vom Beginn (X0) der vorgegeben Verfahrbewegung bis zum Ende (X1) der vorgegebenen Verfahrbewegung (12) die Rotationsbeschleunigung konstant ist.

3. Computerprogramm mit Programmcode zur Durchführung eines Verfahrens nach einem der vorhergehenden Ansprüche, wenn das Computerprogramm von einer Recheneinheit ausgeführt wird.

4. Steuereinrichtung zur Steuerung einer Werkzeugmaschine, wobei die Steuereinrichtung (1) zur Steuerung einer in einem Teileprogramm (2) vorgegebenen Verfahrbewegung (12) eines Werkzeugs (10) und zur Ermittlung einer Rotationsbeschleunigung, mit der das Werkzeug (10) bei der Durchführung der vorgegebenen Verfahrbewegung (12) vom Beginn (X0) der vorgegeben Verfahrbewegung (12) bis zum Ende (X1) der vorgegebenen Verfahrbewegung (12) beschleunigt wird, ausgebildet ist, wobei in dem Teileprogramm (2) eine Solldrehzahl des Werkzeugs(10) vorgegeben ist, **dadurch gekennezeichnet,** dass die Steuereinheit (1) ausgebildet ist, die Rotationsbeschleunigung derart zu ermitteln, dass am Ende (X1) der vorgegebenen Verfahrbewegung (12) des Werkzeugs (10) die Drehzahl des Werkzeugs (10) der Solldrehzahl entspricht, wobei von der Steuereinrichtung (1) anhand der im Teileprogramm (2) vorgegebenen Verfahrbewegung des Werkzeugs (10) die benötigte Zeitdauer (T) zur Durchführung der vorgegebenen Verfahrbewegung (12) und anhand der Zeitdauer (T) die Rotationsbeschleunigung ermittelbar sind.

5. Werkzeugmaschine, die eine Steuereinrichtung (1) nach Anspruch 4 aufweist.

## Claims

1. Method for controlling a rotational movement of a tool (10) based on a parts program (2) in the case of a machine tool, wherein a travel movement (12) to be performed by the tool (10) and a target rotational speed of the tool (10) are predefined in the parts program (2), **characterised in that** during the performance of the predefined travel movement (12) from the start (X0) of the predefined travel movement to the end (X1) of the predefined travel movement (12) the tool (10) is accelerated at such a rotational acceleration that at the end (X1) of the predefined travel movement (12) of the tool (10) the rotational speed of the tool (10) corresponds to the target rotational speed,
wherein based on the travel movement of the tool (10) predefined in the parts program (2) the time (T) required to perform the predefined travel movement (12) is determined, and wherein based on the time duration (T) the rotational acceleration is determined.

2. Method according to claim 1,
**characterised in that** from the start (X0) of the predefined travel movement to the end (X1) of the predefined travel movement (12) the rotational acceleration is constant.

3. Computer program with program code for performing a method according to one of the preceding claims, when the computer program is executed by a computing unit.

4. Control device for controlling a machine tool, wherein the control device (1) is designed to control a travel movement (12) of a tool (10) predefined in a parts program (2) and to determine a rotational acceleration with which during the performance of the predefined travel movement (12) from the start (X0) of the predefined travel movement (12) to the end (X1) of the predefined travel movement (12) the tool (10) is accelerated, wherein a target rotational speed of the tool (10) is predefined in the parts program (2), **characterised in that** the control unit (1) is designed to determine the rotational acceleration such that at the end (X1) of the predefined travel movement (12) of the tool (10) the rotational speed of the tool (10) corresponds to the target rotational speed, wherein based on the travel movement of the tool (10) predefined in the parts program (2) the time (T) required to perform the predefined travel movement (12) can be determined by the control device (1), and based on the time duration (T) the rotational acceleration can be determined.

5. Machine tool, which has a control device (1) according to claim 4.

## Revendications

1. Procédé de commande d'un mouvement de rotation d'un outil (10) à l'aide d'un sous-programme (2) dans une machine-outil, dans lequel on prescrit dans le sous-programme (2) un mouvement (12) de déplacement à effectuer par l'outil (10) et une vitesse de rotation de consigne de l'outil (10), **caractérisé en ce que** l'on accélère l'outil (10) lorsqu'il effectue le mouvement (12) de déplacement prescrit du début (X0) du mouvement de déplacement prescrit à la fin (X1) du mouvement (12) de déplacement prescrit à une accélération en rotation telle qu'à la fin (X1) du mouvement (12) de déplacement prescrit de l'outil, la vitesse de rotation de l'outil (10) corresponde à la vitesse de rotation de consigne, dans lequel on détermine à l'aide du mouvement de déplacement, prescrit dans le sous-programme (2), de l'outil (10) la durée (T) nécessaire pour effectuer le mouvement (12) de déplacement prescrit et dans lequel on détermine l'accélération en rotation à l'aide de la durée (T).

2. Procédé suivant la revendication 1,
**caractérisé en ce que** l'accélération en rotation est constante du début (X0) du mouvement de déplacement prescrit à la fin (X1) du mouvement (12) de déplacement prescrit.

3. Programme d'ordinateur ayant un code de programme pour effectuer un procédé suivant l'une des revendications précédentes lorsque le programme d'ordinateur est réalisé par une unité informatique.

4. Dispositif de commande d'une machine-outil, le dispositif (1) de commande étant constitué pour commander un mouvement (12) de déplacement, prescrit dans un sous-programme (2), d'un outil (10) et pour déterminer une accélération en rotation à laquelle l'outil (10) est, lorsqu'il effectue le mouvement (12) de déplacement prescrit, accéléré du début (X0) du mouvement (12) de déplacement prescrit à la fin (X1) du mouvement de déplacement (12) prescrit, dans lequel il est prescrit dans le sous-programme (2) une vitesse de rotation de consigne de l'outil (10), **caractérisé en ce que** l'unité (1) de commande est constituée pour déterminer l'accélération en rotation de manière à ce qu'à la fin (X1) du mouvement (12) de déplacement prescrit de l'outil (10) la vitesse de rotation de l'outil (10) corresponde à la vitesse de rotation de consigne, dans lequel il peut être déterminé par le dispositif (1) de commande à l'aide du mouvement de déplacement, prescrit dans le sous-programme (2), de l'outil (10) la durée (T) nécessaire pour effectuer le mouvement (12) de déplacement prescrit et au moyen de la durée (T) l'accélération en rotation.

5. Machine-outil qui a un dispositif (1) de commande suivant la revendication 4.
